# EUROPEAN PATENT SPECIFICATION

(11) **EP 1 565 074 B1**
(45) Date of publication and mention of the grant of the patent: **07.05.2008**
(21) Application number: 03772423.4
(22) Date of filing: 10.11.2003
(51) Int. Cl.: A23L 1/221, A23L 1/226, A61Q 11/00

(54) **FLAVOUR COMPOSITIONS**
GESCHMACKSTOFFZUSAMMENSETZUNGEN
COMPOSITIONS AROMATIQUES

(30) Priority: 14.11.2002 GB 0226490
(43) Date of publication of application: 24.08.2005
(73) Proprietor: Quest International Services B.V., 1411 GP Naarden (NL)
(72) Inventor: HAINES, Jan, Thomas, Ashford Kent TN23 4XT (GB)
(74) Representative: Matthews, Heather Clare
(86) International application number: PCT/GB2003/004838
(87) International publication number: WO 2004/043169

(56) References cited:
- WO-A-98/54971
- CA-A- 2 012 288
- S. ARCTANDER: "Perfume and Flavor Chemicals" 1969 , S. ARCTANDER , MONCLAIR, N.J. (USA) XP002269972 examples 618,,1369

## Description

### Field of the Invention

This invention relates to flavour compositions and concerns flavour compositions having cinnamon flavour and also concerns consumer products, particularly but not exclusively oral care products, including the flavour compositions.

### Background to the Invention

Cinnamon is a well known flavour type that is popular with consumers and is widely used in a range of consumer products including oral care products and chewing gum preparations. The desired cinnamon character can be incorporated into a flavour composition by use of cinnamic aldehyde. Cinnamic aldehyde may be used as cinnamic aldehyde itself or in the form of a natural oil containing cinnamic aldehyde, e.g. cinnamon bark oil derived from the inner bark of the Cinnamomum Zeylandicum, preferably the variety grown in Ceylon, or cassia oil (Chinese cinnamon oil) derived from the leaves of Cinnamomum Cassia.

WO 96/15768 discloses an oral composition which may comprise cinnamic aldehyde.

Cinnamic aldehyde has been shown to have sensitiser properties, which means that use of cinnamic aldehyde (and oils containing cinnamic aldehyde) is limited in cosmetic and oral care products.

WO 98/54971 discloses a pesticide comprising 10-50% alpha-terpineol, 10-50% eugenol and 20-35 % cinnamic alcohol.

### Summary of the Invention

In one aspect the present invention provides a flavour composition comprising cinnamic alcohol and eugenol, the cinnamic alcohol and eugenol together comprising at least 3% by weight of the total weight of the composition, the weight ratio of cinnamic alcohol to eugenol being in the range 0.25:1 to 3.5:1.

Surprisingly, it is found that such mixtures of cinnamic alcohol and eugenol provide a cinnamon flavour without requiring the presence of cinnamic aldehyde (either as such or in the form of a cinnamic aldehyde-containing oil).

A flavour composition in accordance with the invention desirably contains no or substantially no cinnamic aldehyde, with cinnamic aldehyde comprising less than 0.1% by weight of the composition, preferably less than 0.05% by weight of the composition, more preferably less than 0.001% by weight of the composition, and ideally being completely absent.

The cinnamic alcohol and eugenol together preferably comprise at least 5% by weight of the total weight of the composition and possibly significantly more, up to 100 % in the extreme case. The amounts of cinnamic alcohol and eugenol in the composition can be varied as appropriate depending on other flavour characteristics required of the composition, as will be discussed below.

The weight ratio of cinnamic alcohol to eugenol may be at least 0.5:1, at least 0.75:1, at least 1:1, and possibly at least 1.5:1. The weight ratio of cinnamic alcohol to eugenol may be not more than 3:1, not more than 2.5:1, and possibly not more than 2:1. Appropriate ratios will again depend on other flavour characteristics required of the composition.

The eugenol may be present as eugenol itself and/or as an ingredient of essential oils and synthetic oils rich in eugenol (preferably containing at least 65% by weight of eugenol). Such oils include clove oils (which typically contain over 90 % by weight of eugenol), cinnamon leaf oil, pimento oil etc.

For improved cinnamon flavour character, the composition preferably also includes capsicum and/or citrus oil, e.g. orange oil, lemon oil etc, with lime oil currently being favoured. Typically such optional additional materials are each present at a level of 1 % by weight or less of the total weight of the composition, with suitable levels again depending on other desired flavour attributes of the composition.

For enhanced cinnamon flavour properties, it is also useful for the composition to include one or more of the following materials: benzyl formate, methyl cinnamate, benzoin, ethyl phenyl glycidate, ginger oil, cinnamyl acetate and methyl heptenone. Such materials improve the cinnamon flavour character, and are listed in order of preference. Again, such materials are typically present in an amount of 1 % by weight or less of the total weight of composition or less, e.g. 0.5% by weight or less. In some cases, even very small amounts, e.g. 0.1 % by weight or less, can have a significant effect on the flavour properties of the composition.

The flavour composition typically also includes other flavour ingredients (which may be selected from the 400-500 or so flavour materials that are in current use when formulating flavour compositions) chosen to give desired overall flavour characteristics to the composition. It is unusual for an oral care flavour composition to have pure cinnamon flavour character, and more normally cinnamon character would be combined with one or more other flavour types, particularly aniseed, peppermint, menthol, spearmint, eucalyptus, wintergreen and/or clove.

The ingredients of the composition are known flavour materials which are readily available commercially in grades suitable for various intended purposes.

The flavour composition of the invention can be readily made by simply mixing the specified ingredients, as is well known to those skilled in the art.

The flavour compositions of the invention provide a useful alternative to cinnamic aldehyde and find application in a wide range of consumer products, particularly oral care products such as toothpastes, mouthwashes, breath sprays and breath freshening tablets. Also of interest are skin care products, e.g. lip care products such as lip balms, and chewing gums. The term "chewing gum" is intended also to encompass bubble gum.

Because the flavour compositions of the invention provide a cinnamon flavour without requiring the presence of cinnamic aldehyde, the undesirable sensitiser properties of cinnamic aldehyde can be avoided.

The present invention also includes within its scope consumer products, particularly oral care products, skin care products and chewing gums, including a flavour composition in accordance with the invention.

The consumer products may otherwise be of conventional composition and include the flavour composition in appropriate amount, as is well known to those skilled in the art. For example, a toothpaste formulation will typically include 0.5% to 1.5%, say about 1% by weight, of the flavour composition. A mouthwash will typically contain the flavour composition in an amount in the range 0.15 % to 0.3% by weight. For a chewing gum, the composition of the invention may be present in an amount in the range 1.5% to 3% by weight.

The invention will be further illustrated by the following Examples of flavour compositions.

Table 1 gives details of 10 flavour compositions, with all amounts being weight percent. Examples A to G are flavour compositions in accordance with the present invention, while Examples H to J are comparative examples outside the scope of the invention. The flavour type of each example was assessed by trained and skilled oral care flavourists and the flavour type characteristics are indicated on the table. In the Table, BPC stands for British Pharmacopoeia, and DQ stands for Dental Quality.

The compositions were prepared by mixing the listed ingredients, with solid materials first being charged to a tank followed by the liquid ingredients. The resulting mixture was then stirred until a homogeneous solution was achieved. The solid materials used are menthol, cyclotene, ethyl maltol and vanillin. Benzoin is best pre-dissolved in one of the liquid ingredients prior to addition to the flavour.

Table 2 gives details of the ingredients used in the flavour examples.

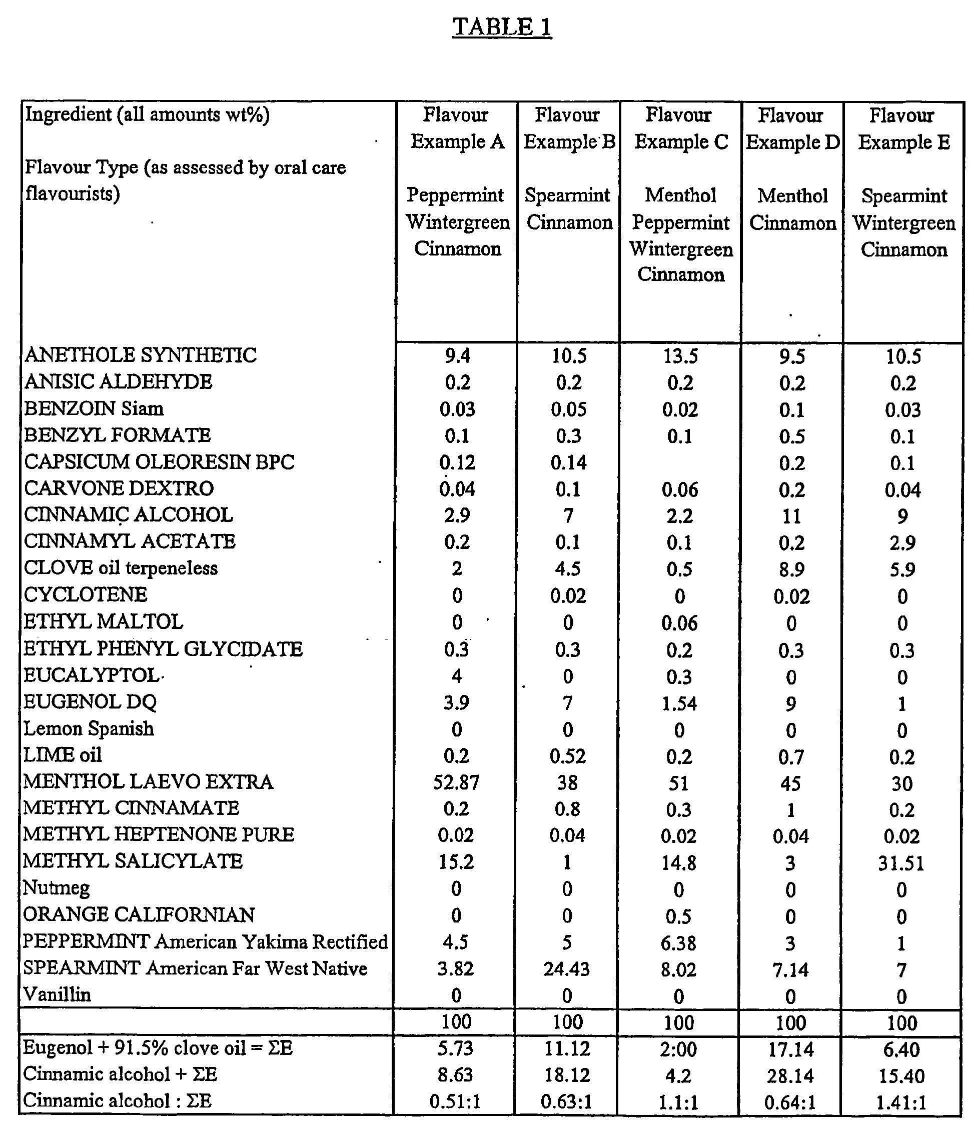

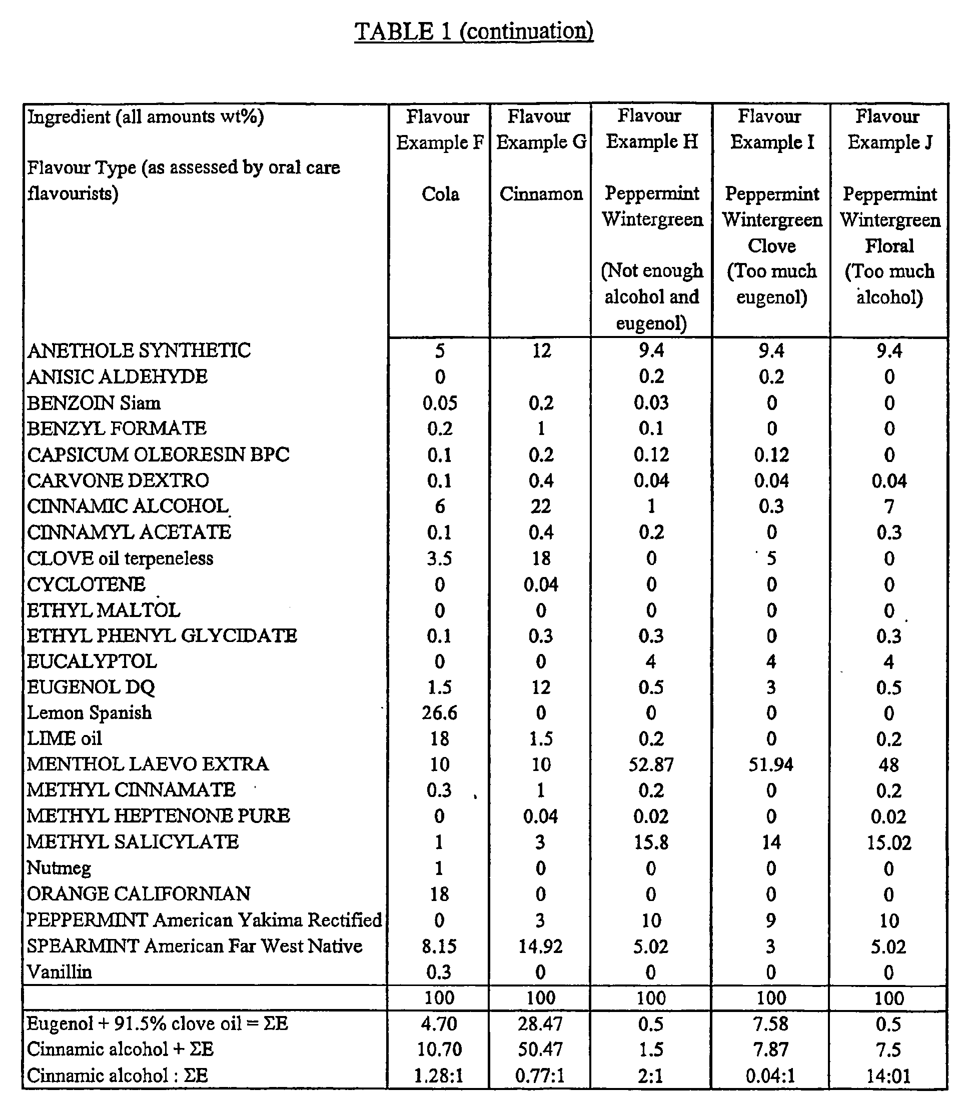

| Ingredient | Chemical Name | CAS Number | FEMA GRAS | Supplier |
|---|---|---|---|---|
| | | | | |
| ANETHOLE SYNTHETIC (Trans) | p-Methoxy Propenyl Benzene | 4180-23-8 | 2086 | Millenium |
| ANISIC ALDEHYDE | p-Methoxybenzaldehyde | 123-11-5 | 2670 | RC Treat &Co LTD |
| BENZOIN Siam | n/a | 9000-72-0 | 2133 | Kelly |
| BENZYL FORMATE | BENZYL FORMATE | 104-57-4 | 2145 | Haarmann & Reimer |
| CAPSICUM OLEORESIN BPC | n/a | 8023-77-6 | 2234 | Lionel Hitchin (Essential Oils) Ltd |
| CARVONE DEXTRO | *d*--1-methyl-4isopropenyl-6-cyclohexen-2-one | 2244-16-8 | 2249 | H Reynaud et Fils |
| CINNAMIC ALCOHOL | trans-3-Phenyl-2-propen-ol | 104-54-1 | 2294 | Haarmann & Reimer |
| CINNAMYL ACETATE | 3-phenyl-2-propenyl acetate | 21040-45-9 | 2293 | Haarmann & Reimer |
| CLOVE oil terpeneless | n/a (90.5-92.5% eugenol) | 8000-34-8 | 2323 | Fragrance Materials |
| CYCLOTENE | Methylcyclopentenolone | 80-71-1 | 2700 | R.C Treat & Co Ltd |
| ETHYL MALTOL | 3-Hydroxy-2-ethyl-4-pyrone | 4940-11.8 | 3487 | Pfizer |
| ETHYL PHENYL GLYCIDATE | Ethyl-3-phenyl-2,3-epoxypropionate | 121-39-1 | 2454 | IFF |
| EUCALYPTOL (1,8-cineole) | 1,8 Epoxy-para-menthane | 470-82-6 | 2465 | AMC Chemicals |
| EUGENOL DQ | 2-methoxy-4-(2-propenyl)phenol | 97-53-0 | 2467 | Charabot |
| Lemon Spanish | n/a | 84929-31-7 | 2625 | IFF |
| LIME oil | n/a | 8008-26-2 | 2631 | Copeland |
| MENTHOL LAEVO | *l*-5-Methyl-2-(1-methylethyl) cyclohexanol | 2216-51-5 | 2665 | Helm |
| METHYL CINNAMATE | Methyl-3-Phenyl-2-propenylate | 103-26-4 | 2698 | Haarmann & Reimer |
| METHYL HEPTENONE PURE | 6-Methyl-5-hepten-2-one | 110-93-0 | 2707 | BASF |
| METHYL SALICYLATE | 2-Hydroxy methylbenzoate | 119-36-8 | 2745 | Rhodia |
| Nutmeg | n/a | 8008-45-5 | 2793 | IFF |
| ORANGE CALIFORNIAN | n/a | 8008-57-9 | 2825 | Charobot |
| PEPPERMINT American Yakima Rectified | n/a | 8006-90-4 | 2848 | Essex Labs Essential Oils & Extracts |
| SPEARMINT American Far West Native | n/a | 8008-79-5 | 3032 | Essex Labs Essential Oils & Extracts |
| Vanillin | 4-Hydroxy-3-methoxy benzaldehyde | 121-33-5 | 3107 | Rhodia |
| | | | | |

## Claims

1. A flavour composition comprising cinnamic alcohol and eugenol, the cinnamic alcohol and eugenol together comprising at least 3% by weight of the total weight of the composition, the weight ratio of cinnamic alcohol to eugenol being in the range 0.25:1 to 3.5:1.

2. A composition according to claim 1, wherein the cinnamic alcohol and eugenol together comprise at least 5% by weight of the total weight of the composition.

3. A composition according to claim 1 or 2, wherein the weight ratio of cinnamic alcohol to eugenol is at least 0.5:1.

4. A composition according to any one of the preceding claims, wherein the weight ratio of cinnamic alcohol to eugenol is not more than 3:1.

5. A composition according to any one of the preceding claims, wherein the composition also includes capsicum and/or citrus oil.

6. A composition according to claim 5, wherein the citrus oil comprises lime oil.

7. A composition according to any one of the preceding claims, wherein composition also includes one or more of the following materials: benzyl formate, methyl cinnamate, benzoin, ethyl phenyl glycidate, ginger oil, cinnamyl acetate and methyl heptenone.

8. A composition according to any one of the preceding claims, wherein the composition contains no or substantially no cinnamic aldehyde.

9. A consumer product including a flavour composition in accordance with any one of the preceding claims.

10. A consumer product according to claim 9, wherein the product is selected from oral care products, skin care products and chewing gums.

## Patentansprüche

1. Aromazusammensetzung, umfassend Zimtalkohol und Eugenol, wobei der Zimtalkohol und das Eugenol zusammen wenigstens 3 Gew.-% des Gesamtgewichts der Zusammensetzung umfassen und das Gewichtsverhältnis von Zimtalkohol zu Eugenol im Bereich von 0,25:1 bis 3,5:1 liegt.

2. Zusammensetzung gemäß Anspruch 1, wobei der Zimtalkohol und das Eugenol zusammen wenigstens 5 Gew.-% des Gesamtgewichts der Zusammensetzung umfassen.

3. Zusammensetzung gemäß Anspruch 1 oder 2, wobei das Gewichtsverhältnis von Zimtalkohol zu Eugenol wenigstens 0,5:1 beträgt.

4. Zusammensetzung gemäß einem der vorstehenden Ansprüche, wobei das Gewichtsverhältnis von Zimtalkohol zu Eugenol nicht größer als 3:1 ist.

5. Zusammensetzung gemäß einem der vorstehenden Ansprüche, wobei die Zusammensetzung auch Capsicum und/oder Citrusöl umfasst.

6. Zusammensetzung gemäß Anspruch 5, wobei das Citrusöl Limonenöl umfasst.

7. Zusammensetzung gemäß einem der vorstehenden Ansprüche, wobei die Zusammensetzung ferner eines oder mehrere der folgenden Materialien umfasst: Benzylformiat, Methylcinnamat, Benzoin, Ethylphenylglycidat, Ingweröl, Cinnamylacetat und Methylheptenon.

8. Zusammensetzung gemäß einem der vorstehenden Ansprüche, wobei die Zusammensetzung kein oder im Wesentlichen kein Zimtaldehyd umfasst.

9. Verbraucherprodukt, umfassend eine Aromazusammensetzung gemäß einem der vorstehenden Ansprüche.

10. Verbraucherprodukt gemäß Anspruch 9, wobei das Produkt aus Mundpflegeprodukten, Hautpflegeprodukten und Kaugummis ausgewählt ist.

## Revendications

1. Composition aromatique comprenant de l'alcool cinnamique et de l'eugénol, l'alcool cinnamique et l'eugénol constituant conjointement au moins 3 % en poids du poids total de la composition, le rapport pondéral entre l'alcool cinnamique et l'eugénol étant dans la plage de 0,25:1 à 3,5:1.

2. Composition selon la revendication 1, dans laquelle l'alcool cinnamique et l'eugénol constituent conjointement au moins 5 % en poids du poids total de la composition.

3. Composition selon la revendication 1 ou 2, dans laquelle le rapport pondéral entre l'alcool cinnamique et l'eugénol est d'au moins 0,5:1.

4. Composition selon l'une quelconque des revendications précédentes, dans laquelle le rapport pondéral entre l'alcool cinnamique et l'eugénol est d'au plus 3:1.

5. Composition selon l'une quelconque des revendications précédentes, où la composition comprend également de l'huile de poivron et/ou d'agrumes.

6. Composition selon la revendication 5, dans laquelle l'huile d'agrumes comprend de l'huile de lime.

7. Composition selon l'une quelconque des revendications précédentes, où la composition comprend également l'une ou plusieurs des substances suivantes : du formiate de benzyle, du cinnamate de méthyle, de la benzoïne, du glycidate d'éthylphényle, de l'huile de gingembre, de l'acétate de cinnamyle et de la méthylhepténone.

8. Composition selon l'une quelconque des revendications précédentes, où la composition ne contient pas ou essentiellement pas d'aldéhyde cinnamique.

9. Produit de consommation comprenant une composition aromatique selon l'une quelconque des revendications précédentes.

10. Produit de consommation selon la revendication 9, où le produit est choisi parmi des produits de soins buccodentaires, des produits de soins de la peau et de gommes à mâcher.
